# EUROPEAN PATENT APPLICATION

(11) **EP 1 158 701 A2**
(43) Date of publication of application: **28.11.2001**
(21) Application number: 01111218.2
(22) Date of filing: 14.05.2001
(51) Int. Cl.: H04B 7/204

(54) **Apparatus for contolling the routing in a satellite communication system**

(30) Priority: 22.05.2000 US 575889
(71) Applicant: TRW Inc., Redondo Beach, California 90278 (US)
(72) Inventor: Takahashi, Scott M., Torrance, CA 90503 (US); Moy-Yee, Lisa A., Torrance, CA 90505 (US); Yee-Madera, Gefferie H., San Gabriel, CA 91776 (US); Wong, Roland Y., Monrovia, CA 91016 (US); Gregoire, Darren R., Redondo Beach, CA 90278 (US); Jue, Reginald, Manhattan Beach, CA 90266 (US)
(74) Representative: Schmidt, Steffen J., Dipl.-Ing.

(57) **Abstract**

A satellite communication system controls the processing of a plurality of ATM communication data cells. A look-up table 664 stores control parameters. An inbound module 500 receives control data cells from a ground based network operations center 300 and routes them to controller 114 which modifies the parameters in the table 664 according to the control data in the cells. The ATM communication data cells are processed in an outbound module 600 according to the parameters stored in the table 664.

## Description

### BACKGROUND OF THE INVENTION

This invention relates to a processing communication satellite and more particularly relates to terrestrial control of a cell switch in such a satellite.

The space environment imposes some unique requirements on a cell switch. Due to limitations to the weight and power imposed by launch cost and battery storage, as well as technology limitations to meet radiation requirements, it is not efficient to have all the processing normally associated with an ATM switch on board the satellite. Call admission and control are processing intensive functions which can not be implemented efficiently on board a satellite. The weight and power required for the complete implementation of such functions would steal from the revenue producing throughput of the satellite. Moving such functions to the ground requires an efficient mechanism to control routing functions from the ground without requiring a large amount of traffic or processing. A large amount of traffic reduces capacity available for revenue generating services, and a large amount of processing increases latency (i.e., slower performance for the user) and on-board power.

There is a need for cell admission and control techniques flexible enough to provide higher performance as technology allows more processing power to be flown on the spacecraft. The control technique also must address satellite unique issues such as hopping beams and adaptive coding. This invention provides such techniques.

### BRIEF SUMMARY OF THE INVENTION

This invention is useful in a satellite communication system in order to control routing by processing a plurality of communication data cells received from a ground-based communication station. According to the preferred embodiment, a plurality of control parameters is stored, preferably in the satellite in a digital memory. The communication data cells are received by the satellite, preferably by an input, such as an input module. Control parameters are altered in response to control data cells, preferably by a logic unit. The communication data cells are processed for transmission according to their control parameters, preferably by an output module.

The foregoing techniques offer a number of advantages. For example, they allow complex caller admission and control functions to be implemented on the ground to save weight and power in the satellite, thereby reducing spacecraft and launch costs and/or increasing the capacity of the payload. They also provide unified support for spacecraft unique functions, such as adaptive coding and hopping beams, along with standard ATM functions. They also provide an option to migrate functions from ground to spacecraft as more processing power is available to improve response time to changes in traffic. They also enable the integration of all information in a minimum number of tables minimizing the number of buffers and buffer accesses required, thereby minimizing weight and power.

### BRIEF DESCRIPTION OF THE DRAWINGS

Figure 1 is a schematic block diagram of a preferred form of transmission and reception apparatus made in accordance with the invention.
Figure 2 is an illustration of a preferred form of beam lay down pattern for use in connection with the preferred form of the present invention.
Figure 3 illustrates a preferred form of multibeam coverage pattern enabling frequency reuse in accordance with the preferred form of the invention.
Figure 4 is a schematic block diagram illustrating a preferred form of satellite cell switch.

### DETAILED DESCRIPTION OF THE INVENTION

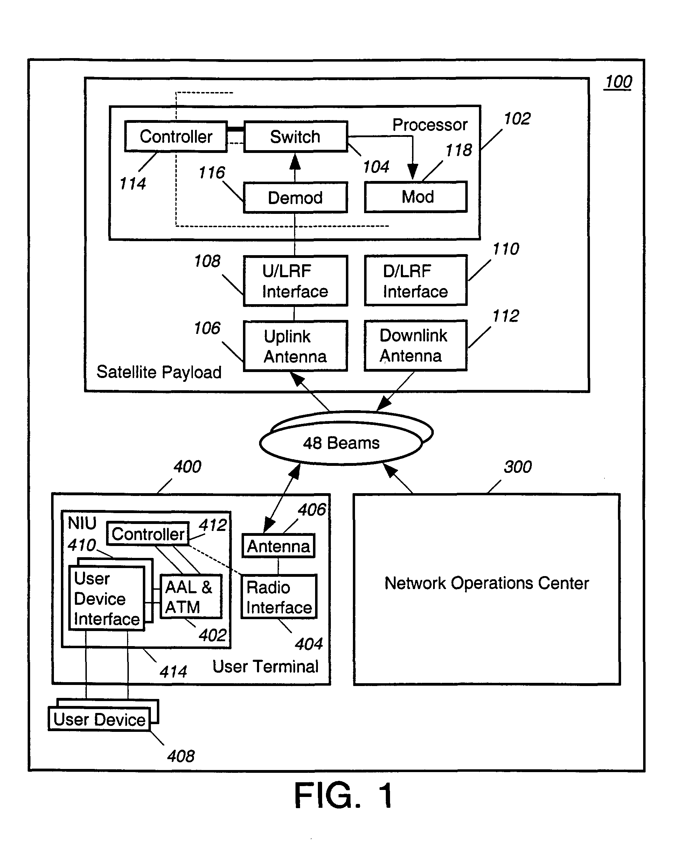

Referring to Figure 1, a preferred form of the invention includes one or more satellites, such as satellite 100, in Geo-orbit. Satellite 100 contains a processor 102 that performs a cell switching function. The processor's controller 114 configures a cell switch 104 based on commands received from one or more ground-based Network Operations Center (NOCs) such as NOC 300. Controller 114 may be implemented by various forms of logic units, such as microprocessors, microcontrollers or hard wired circuits capable of logic operations. The NOC 300 provides ATM switch management functionality, including call admission control, routing control, queuing control and the like, as well as the signaling of one or more User Earth Terminals (UETs), such as UET 400, required to establish an ATM switched virtual circuit.

The payload of satellite 100 is controlled by NOC 300 which may control multiple satellites.

ATM cells transmit user data through the system, from source UET 400 to a destination UET (not shown). This is the primary system flow, starting from the AAL/ATM component 402 within a network interface unit (NIU) 414; flowing through the UETs RF interface 404 and antenna 406; through the satellite payload's uplink antenna 106 and RF interface 108; switched through the processor 102 through the payload's downlink RF interface 110 and antenna 112; and finally through the destination UETs antenna and RT interface to the destination UET's ATM/AAL component (not shown). A controller 412 controls component 402.

User data is transferred between the system and a user device 408 via the "External User Data" flow. This data flow, which is in a format unique to the user device, yet based on industry standards, is converted into a UET internal format (e.g., a PCI bus) by a user device interface 410 and transferred to the ATM/AAL component 402 where it enters the ATM cell flow. In addition to the transfer of user data, ATM cells are used to transport signaling. This data flow includes the signaling of messages between the controllers located in the NOC 300, payload processor 102 and UET 400. ATM cells are used in this stream for two reasons. First, the satellite payload's controller can exchange messages with any UET and NOC by simply sending an ATM cell with the correct address to the cell switch 104. The controller interfaces to the switch through switch ports. Second, the multiple access scheme in the UET and NOC must already address the insertion of ATM cells into the transmission subsystem to carry user data. Inserting signaling messages into this data stream is made simpler by using the same ATM cell format.

Control and management signals are provided internal to each component. The payload controller 114 must collect traffic statistics from the switch; telemetry data is collected within NOC 300 and transferred to the satellite 100; the payload controller 114 must configure the switch 104 to route virtual circuits; timing and frequency signals must be passed to many payload components, etc.

Component 402 within the NIU 414 is responsible for converting a stream of bits produced by the user device interface into ATM cells. In order to produce ATM cells, this component implements various ATM Adaption Layer (AAL) protocols. It is also responsible for inserting messages produced by the controller into the ATM "stream" and removing ATM cells received from the network destined for the controller.

The controller 412 provides network specific signaling functions. This includes subscriber registration, the establishment of connections between the UET 400 and the network and network management functions.

The central role of the satellite 100 payload is to switch ATM cells from source to destination. In order to switch ATM cells, the source bit stream must be recovered (demodulated and decoded), partitioned into cells, and routed through the switch 104. These functions constitute a "processed payload" in common industry parlance and are provided by the processor 102 in the system architecture.

The controller 114 provides network specific signaling functions. This includes the establishment of virtual circuits through the ATM switch and network management functions.

The Network Operations Center (NOC) 300 serves as the "switch manager" for the satellite payload's cell switch. The NOC 300 controls the establishment of each ATM virtual circuit through an exchange of signaling messages with the source and destination UETs.

In its switch manager role, the NOC 300 performs a variety of functions, including: call establishment signaling; cell switch configuration; call admission control; user authentication; user service authorization; address resolution; routing; connection statistics collection; network congestion control; and priority access control.

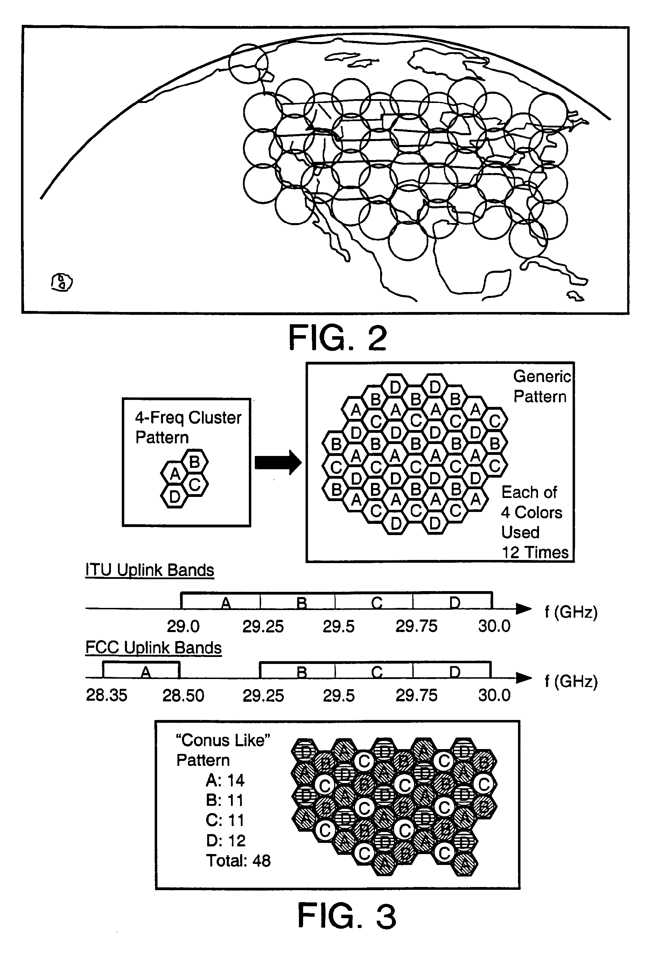

Satellite 100 uses multiple spot beams to permit high quality link performance via cellular beam coverage areas with higher gains and to obtain frequency re-use where spatial isolation among beams allows the same frequency band to be used for multiple areas. In a representative beam layout for the geographical coverage area of the contiguous, continental United States (CONUS), there are 48 beams with coverage as shown in Figure 2.

Satellite 100 achieves high spectral efficiency by using each band of frequencies repeatedly across the geographical coverage area. In the representative beam layout illustrated in Figure 2, there are four distinct classes of beams (i.e., A, B, C, and D for the uplink.) Each class has twelve members for a forty-eight beam geographic coverage, and is referred to as a "color" with each beam in the color using the same pair of bands.

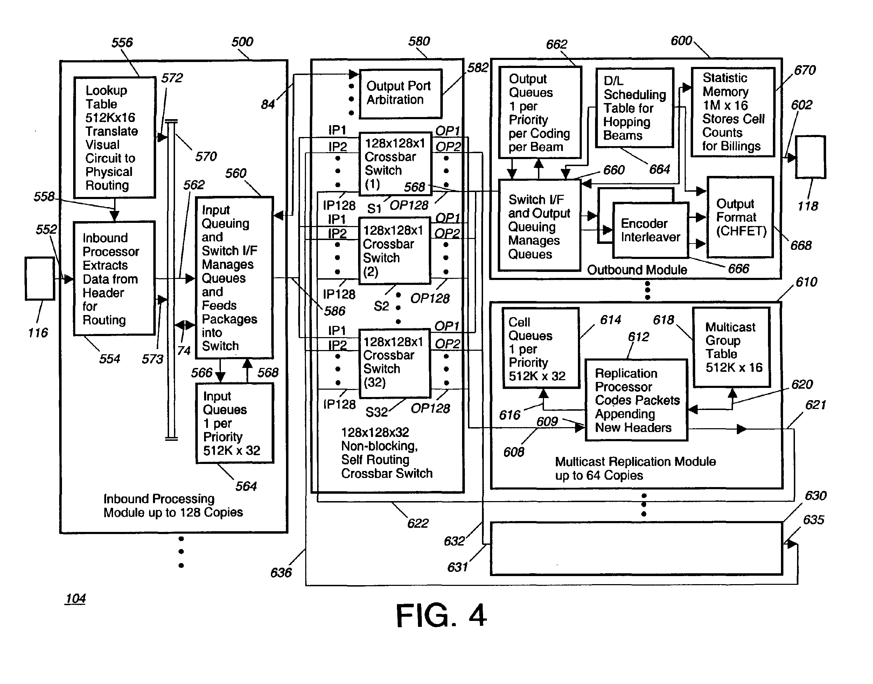

Figure 3 shows how hexagonal beam tessellation using a cluster of four frequencies can be used to construct a 48-beam pattern. For a symmetric overall pattern, all frequencies repeat equally, while for asymmetric patterns, there is an unequal distribution of the four frequencies which depends on the pattem's shape.

For a single satellite 100 with a symmetric coverage pattern (Figure 3), each of the four pairs of uplink and downlink frequency bands is re-used 12 times in the 48-beam coverage area by spatial frequency re-use: that is, a total of 12.0 GHz of bandwidth is available at the satellite for both the uplink and the downlink. When a pair of satellites using circular polarization operates from the same geostationary orbital location into the same geographical area, polarization frequency reuse will double the re-use factor to 24.

Referring to Figure 4, cell switch 104 comprises an inbound processing module 500, a switch module 580, an outbound processing module 600, and multicast replication modules 610 and 630. Additional information about multicast replication modules 610 and 630 is described in U.S. Patent Application Serial No. 09/408,048 entitled "Method And Means For Serial Cell Replication For Multicast In A Cell Switch," identified as TRW Docket No. 22-0050, filed on September 29, 1999, in the names of Lisa Ann Moy-Yee et al., assigned to the same assignee as this application and incorporated by reference into this application. Additional information about inbound processing module 500, switch module 580 and outbound processing module 600 is described in U.S. Patent Application Serial No. 09/270,938 entitled "Queue Segmentation And Addressing Procedure For A Space Based Cell Switch In A Processing Communication Satellite," identified as TRW Docket No. 22-0048, filed on March 16, 1999, in the names of Scott M. Takahashi et al., assigned to the same assignee as this application and incorporated by reference into this application. Additional information about inbound processing module 500 and switch module 580 is described in application entitled "Spaced Based Cell Switching Using Table Based Transfer Tags," identified as TRW Docket No. 22-0054, filed on concurrently herewith, in the names of Scott M. Takahashi et al., assigned to the same assignee as this application and incorporated by reference into this application.

As shown in Figure 4, inbound processing module 500 receives ATM data cells from demodulator 116 over an input bus 552. Module 500 includes a processor 554 which processes the header data from a conventional ATM cell comprising 53 octets of data.

According to the preferred embodiment, processor 554 adds a routing code, as well as additional data, to the cells based on information in the ATM cell header and information located in a look-up table memory 556 which communicates with processor 554 over a bus 558. The cells requiring multicast processing are tagged with physical routing information from memory 556 corresponding to one of several multicast replication modules in the satellite, such as modules 610 and 630. In other words, data is added to the ATM cell header which identifies a particular multicast replication module in which the ATM cell is to be replicated. Processor 554 preferably adds to the ATM cells requiring multicast processing 7 bits of routing tag information, as well as an identification of the priority of the cell. In addition, virtual path identifiers and channel path identifiers, as well as a downlink coding, also may be added to the cells. As a result, the size of the ATM cells is expanded from the normal 53 octets to 56 octets.

Processor 554 also writes a routing tag and other data to the cells not requiring multicast replication. The routing tag routes the cells to outbound processing module 600 without being routed to a multicast replication module.

After processing the inbound ATM cells, processor 554 transmits the cells to a queue control circuit 560 over a bus 562. Circuit 560 transmits the ATM cells into input queues 564 over a bus 566. Queue control circuit 560 arranges the queues according to priority based on information in the ATM cell header.

Cells are stored in 64 bit words in queues 564. As a result, it requires 7 transfers of data into queues 564 in order to transfer each 56 octet ATM cell.

At the appropriate time, the ATM cells stored in queues 564 are transmitted over a 32 bit input bus 586 to one of input ports IP1-IP128 of crossbar switches S1-S32 of switch module 580. Switches S1-S32 each include coupling circuitry for electrically coupling any input port to any output port. In the example shown in Figure 4, bus 586 is connected to input port IP1 of each of switches S1-S32. Bus 586 is coupled to processor 554 through queue control 560.

An output port arbitration and code reader 582 signals queue control circuit 560 over a bus 584 when the crossbar switches are available for the switching of data. Code reader 582 reads the routing tag information from the ATM cells which identify the physical location to which the cell is to be switched. Those cells which require no multicast processing are switched to one of output nodes or ports OP1-OP128 that are connected to an outbound processing module, such as module 600. In the example shown in Figure 5, the input of outbound processing module 600 is connected to output node or port OP1 of each of crossbar switches S1-S32.

According to the preferred embodiment, there are as many inbound processing modules like module 500 shown in Figure 4 as uplink beams processed by the uplink receiver.

Satellite 100 includes a downlink transmitter 118 capable of simultaneously broadcasting 48 beams of data to a group of ground-based communications stations, such as 300 and 400 (Figure 1). According to the preferred embodiment, there are as many outbound processing modules, like module 600 shown in Figure 4, as downlink transmitting beams.

ATM cells which are tagged to indicate the need of multicast processing are read by circuit 582 and are switched to output ports of switch module 580 that are connected to a multicast replication module, such as module 610. In the example shown in Figure 4, a 32 bit output bus 608 connects each of output nodes or ports OP128 of crossbar switches S1-S32 to an input 609 of a replication processor 612 of multicast replication module 610. Replication processor 612 transmits the incoming ATM cells to cell queue memory 614 in 64 bit words over a conventional bus 616. The virtual path or virtual channel identifiers in the header of each ATM cell stored in queue memory 614 are used to address a multicast group table in a memory 618 which provides over a bus 620 the number of copies of the ATM cell to be made, the physical routing for each copy, new virtual channel or virtual path identifiers and other data. Processor 612 replicates or copies the data cell the required number of times and inserts in each replicated cell the foregoing data from memory 618. The routing code may be altered for each replicated ATM cell. When port arbitration and reader circuit 582 indicates that switch module 580 is available, the replicated ATM cells are transmitted from an output 621 of module 610 over a 32 bit bus 622 to input ports of switch module 580. In the example shown in Figure 5, output 621 is connected to input ports IP 128 of each of crossbar switches S1-S32. Circuit 582 reads the header information in the replicated ATM cells and switches the cells to outbound processing module 600 over bus 588. In a well-known manner, the outbound processing module prepares the cells for transmission over one of the transmitting beams. After processing by module 600, the ATM cells are transmitted through an output 602 to modulator 118.

According to the preferred embodiment, additional multicast replication modules may be added to satellite 100 as required by a customer's need for multicast replication processing. For example, an additional multicast replication module 630 identical to module 610 may be added as shown in order to enable simultaneous multicast processing by modules 610 and 630. Module 630 includes an input 631 connected to a 32 bit bus 632 which is connected to output nodes or ports OP2 of each of crossbar switches S1-S32. Replication module 630 also includes an output 635 which is connected to input ports IP2 of each of crossbar switches S1-S32 over a 32 bit bus 636. Additional details about multicast replication modules 610 and 630 are provided in the related application previously identified.

Preferably, inbound processor 554 adds information to each ATM cell requiring multicast processing information indicating whether the cell is to be processed by module 610 or module 630. However, processor 554 can be programmed so that an algorithm will allocate an ATM cell requiring multicast processing to the next available multicast replication module. In this embodiment, the identifier placed into the ATM cell need not identify the particular multicast replication module in which the processing will take place.

As shown in Figure 4, outbound module 600 includes a switch interface/fetch and output queuing processor 660 which receives ATM cells from switch 580 and places them in an output queue memory 662 according to a well-known priority algorithm. Processor reads ATM cells from queue memory 662 according to parameters stored in a scheduling table for hopping beams 664 and transmits the ATM cells to an encoder and interleaver 666. An output format processor 668 prepares the ATM cells for transmission to modulator 118. The operation of processor 668 is controlled in part by parameters stored in table 664. A statistical memory 670 stores cell counts for billing purposes.

All parameters required to schedule and route an ATM cell can be integrated into table 664 (Figure 4) which can be modified by a ground based call admission and control function executed by NOC 300. The parameters stored in table 664 include, but are not limited to, guaranteed bandwidth, coding rate, beam area information, such as the physical destination port or down link beam, bandwidth allocation to each priority (QOS class), control of QOS parameters associated with each priority, allocation of bandwidth to coding rates (or other adaptive downlink solutions) and the beam areas for hopping beams. By including all parameters in table 664, an interface is provided to modify table 664 from NOC 300.

In practice, as ATM communication data cells are received by inbound processor 554, they are routed to memory 662 in the manner previously described. Sometimes, the ATM cells are first routed to a multicast module before the replicated cells are routed to memory 662.

In order to change the parameters stored in table 664, NOC 300 sends single ATM control data cells which include all the data required to store or modify the necessary parameters in table 664. As the ATM cells bearing the control data are received, the VPI/VCI fields in the cell header are used by processor 554 to address table 556. A routing tag is added to the control data cells which route them through switch 580 and through output ports, such as OP1, to an output module, such as 600, and are placed in an output queue, such as 662. When the control data cells are retrieved from the queue, they are transferred to controller 114 (Fig. 1) instead of being processed for downlink transmission. Controller 114 has an interface within each outbound module, as well as within each inbound module. Controller 114 writes entries of data from the data control cells into table 664 in order to modify the control parameters in the table.

In summary, the foregoing techniques enable a ground based call admission and control function to control the allocation of downlink bandwidth to different groupings of cells to support features such as Quality of Service (QOS) guarantees, hopping beams, adaptive downlink coding and fencing through updates of scheduling table 664. The programmable table 664 has an entry for each cell transmission opportunity. Each entry can include but is not limited to information such as the QOS class given priority, the beam area, coding rate and user group. Modifying table 664 to reflect changing traffic patterns allows efficient bandwidth utilization and support of QOS parameters, such as cell loss ratio, cell delay variation to be met by matching resource allocation to the virtual circuits and paths allocated to users. The integrated table 664 provides a simple and power efficient means for control of the resource allocation from the ground and a growth path to higher performance when technology advances allow functions to be migrated from the ground to the satellite.

Table 664 is updated from the ground through single cell data control messages in ATM cells as connections are added or deleted. The table cycles through on a periodic basis allowing control of a percentage of downlink bandwidth allocated to various parameters by the relative number of entries containing each parameter of interest. Bandwidth is guaranteed for a QOS class by allowing any priority to be treated as the highest priority . Then if no cells exist for that priority, the normal fixed priority is resumed. Table 664 supports construction of multi-cell frames where all cells within the frame share the same coding rate and go to the same beam area. At each cell transmission opportunity, table 664 is read and only cells meeting the criteria specified by parameters in the table are selected for processing from queue memory 662.

Those skilled in the art will recognize that the preferred form of the invention may be altered or modified without departing from the true spirit and scope of the invention as defined in the accompanying claims. For example, the system can operate not only on ATM cells, but other forms of packet switching cells. The reader of the ATM cell header need not be in switch module 580, but also can be located in other modules. The nodes described in connection with switch module 580 can be moved to other locations. Switch module 580 may comprise a bus structure in which modules 600, 610 and 630 take the form of peripheral devices addressed by the bus. The various processors shown in the Figures may be combined into a single processor.

## Claims

1. In a satellite communication system, apparatus for controlling routing by processing a plurality of communication data cells received from a ground-based communication station comprising:
a memory connected to store a plurality of control parameters;
an input connected to receive the communication data cells and control data cells;
a logic unit responsive to the control data cells to alter said control parameters; and
an output module connected to process for transmission the communication data cells according to at least one of the said control parameters.

2. Apparatus, as claimed in claim 1, wherein the parameters comprise routing data and priority data.

3. Apparatus, as claimed in claim 2, wherein the parameters further comprise physical destination port and quality of service data area.

4. Apparatus, as claimed in claim 3, wherein the parameters further comprise coding rate, beam area and bandwidth allocation.

5. Apparatus, as claimed in claim 3, wherein the parameters further comprise beam areas for hopping and downlink beam.

6. In a satellite communication system, a method for controlling routing by processing a plurality of communication data cells received from a ground-based communication station comprising:
storing a plurality of control parameters suitable for controlling the processing of said communication data cells;
receiving the communication data cells and control data cells
altering the control parameters in response to control data in said control data cells; and
processing the communication data cells for transmission according to the control parameters.

7. A method, as claimed in claim 6, wherein the parameters comprise routing data and priority data.

8. A method, as claimed in claim 7, wherein the parameters further comprise physical destination port and quality of service data.

9. A method as claimed in claim 8, wherein the parameters further comprise coding rate, beam area and bandwidth allocation.

10. A method, as claimed in claim 7, wherein the parameters further comprise beam areas for hopping and downlink beam.
